# EUROPEAN PATENT APPLICATION

(11) **EP 1 968 274 A1**
(43) Date of publication of application: **10.09.2008**
(21) Application number: 07004706.3
(22) Date of filing: 07.03.2007
(51) Int. Cl.: H04L 29/06, H04L 12/28, H04L 12/56

(54) **Method for supporting an existing authentication infrastructure**

(71) Applicant: Siemens Networks GmbH & Co. KG, 81541 München (DE)
(72) Inventor: Dillinger, Markus, 82041 Oberhaching (DE); Kröselberg, Dirk, 80469 München (DE)
(74) Representative: Maier, Daniel Oliver

(57) **Abstract**

Method and device for providing a possibility for terminals which register to a WiMAX network corresponding to a specification of the WiMAX Forum to also communicate with an existing infrastructure for already existing access networks like DSL, and using the services thereof, while maintaining a correct and cryptographic safe authentication and authorization.

## Description

The present invention relates to a method and device for supporting an existing authentication infrastructure on an Extensible Authentication Protocol (EAP) based network access, and in particular to a method and device for safe accessing existing access networks by terminals and/or users using an existing infrastructure.

It is desired that stationary or mobile terminals as well as users, which intend to register to or access a Worldwide interoperability for Microwave Access network (WiMAX-network) corresponding to a specification of the WiMAX-Forum or WiMAX networking group (WiMAX NWG) and to access to the services thereof, shall be able to communicate with an existing infrastructure for already existing access networks like DSL, and to deploy their services. In this case, a correctly and cryptographically safe authentication and authorization shall be guaranteed.

According to the known prior art, such an access is not possible without modifying a present infrastructure for e.g. an DSL access. The reason for this is are the different instances for authentication and authorization for a WiMAX access and e.g. a DSL access. The authentication and authorization for the WiMAX access takes place on an Access Provider (AP) site, whereas e.g. the DSL access takes place on the Service Provider (SP) site, resulting in a lack of authentication and authorization authority of the Access Provider (AP) for the DSL access. A DSL access for example utilizes the protocols PPPoE (PPP over Ethernet) and CHAP or PAP for an authentication, which is not available for an WiMAX access. In particular, a Broadband Router Access Server (BRAS) on the landline side has to be adapted, which, however would not be accepted by the client owing to the presently installed infrastructure.

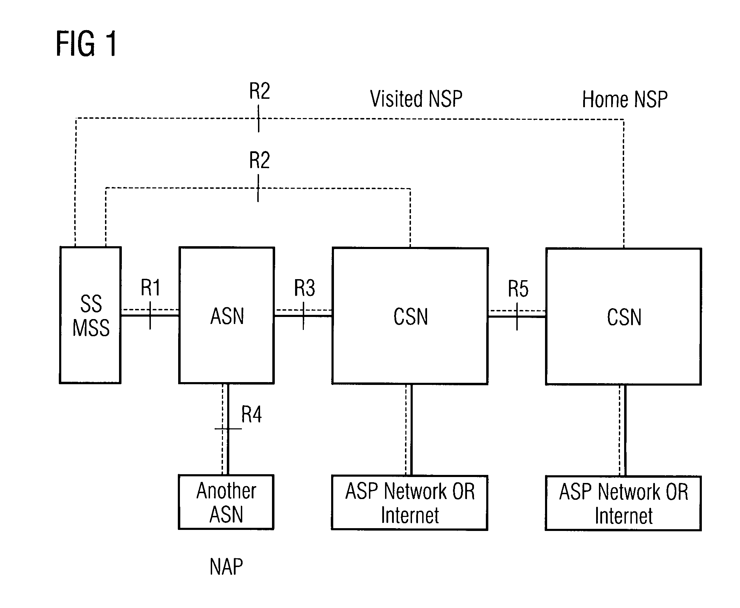

WiMAX networks will be or are defined by the WiMAX-Forum and are based on the IEEE 802.16 standards (IEEE 802.16). The networking group (NWG) of the WiMAX-Forum determines in a specification design (WiMAX NWG) among others the network architecture for WiMAX nets as depicted in Fig. 1. Each Subscriber Station (SS) or Mobile Subscriber Station (MS) is connected via a reference point R1 to an Access Service Network (ASN), which Access Service Network is operated by a Network Access Provider (NAP or AP). The Access Networks are divided into a particular number of Base Stations (BS) and on or more so-called Access Service Network Gateways (ASN-GW). The wireless interface or air interface between a Subscriber Station/Mobile Subscriber Station and a Base Station is specified in the IEEE 802.16 standard.

Via a reference point R3 an Access Service Network is connected to a Connectivity Service Network (CSN), which is operated by a Network Service Provider (NSP). Connectivity Service Networks support Access Service Networks for the authentication of Subscriber Stations, supply these Subscriber Stations with IP addresses and provide an access to IP based networks like the Internet. In a roaming situation, the foreign Connectivity Service Network is connected via a reference point R5 to the home Connectivity Service Network (i.e. the Connectivity Service Network which charges the service used by the Subscriber Station to the subscriber). The reference points R2 constitute connections from the Subscriber Station/Mobile Subscriber Station to the several Connectivity Service Networks, and the reference point R4 constitutes a connection between two Access Service Networks.

The difference between a Wireless Local Area Network (WLAN) and a Worldwide interoperability for Microwave Access (WiMAX) is that in WiMAX a so-called Base Station is not the instance which decides on the authorization and authentication, but the ASN Gateway that is responsible for the Base Station and an EAP server. In a wireless local area network the decision on the access either lies on the instance of a service provider to which the subscriber station is connected via an Access Point (AP) or the AP itself so that the authorization and authentication according to a WiMAX specification is not appropriate for an authentication and authorization to a Wireless Local Area Network. Also, in WiMAX authentication of both device and subscriber is possible, whereas in a wireless local area network only one authentication and authorization is possible during network access.

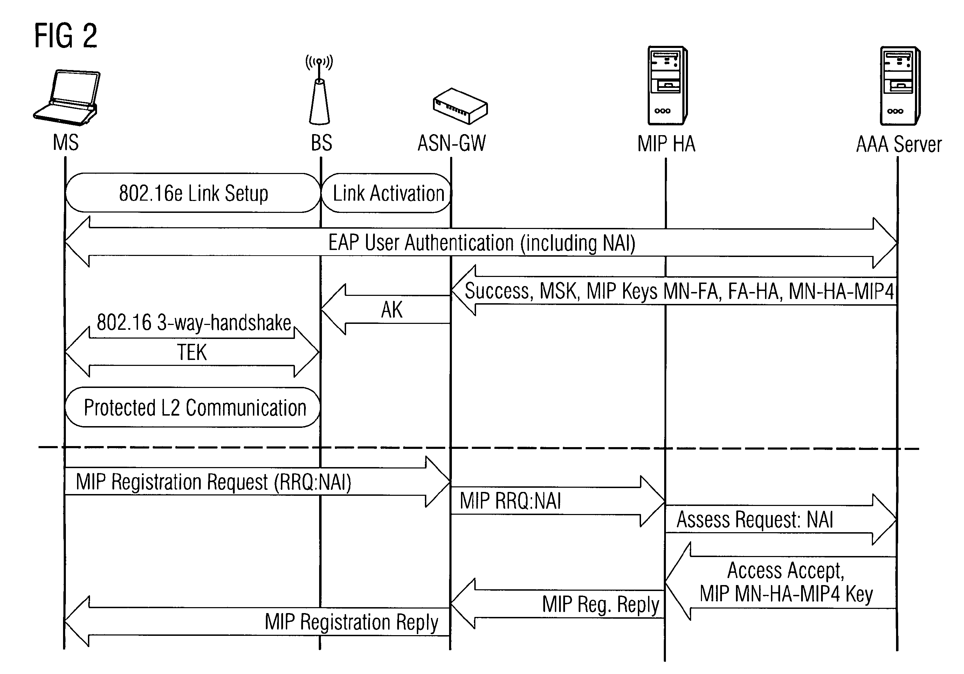

A registration according to a WiMAX specification will be illustrated with respect to Fig. 2. A subscriber is linked to a Base Station via an IEEE 802.16e link setup, wherein the Base Station is connected to an Access Service Network Gateway via a link activation. The Access Provider comprises not only a plurality of Base Stations and Access Service Network Gateways, but also a mobile IP Foreign Agent and an Authentication, Authorization and Accounting Client (AAA Client, Authenticator). The communication is carried out on an Extensible Authentication Protocol (EAP) for a user authentication including the provision of a Network Access Identifier (NAI).

Thus, the Base Station receives an access key so that subsequently the subscriber communicates with the Base Station via an IEEE 802.16 three-way handshake, thus establishing a protected safe communication. Afterwards, the subscriber submits a mobile IP registration request to the Access Service Network Gateway and receives a mobile IP registration reply so that an authentication and authorization takes place between the subscriber and the Access Provider. It should be noted that the authorization may be carried out by a user as well as a terminal. Further, also a double authentication including two subsequent EAP iterations is possible for a combined terminal and user authentication.

The access to networks of the 3rd Generation Partnership Project (3GPP) to a Wireless Local Area Network is defined in the 3GPP TS 33.234 specification. In S3-060366 a mechanism is specified as a supplement to TS 33.234, also realizing a safe access with subsequent authentication with an external Authentication, Authorization and Accounting server, authenticating the access to a private network.

However, according to the prior art, two separate subsequent authentications to the different networks (WLAN/3GPP as well as a private network/DSL) is carried out, so that the described WiMAX access cannot be used, since according to the WiMAX specification no additional EAP authentication is possible for authenticating independently from the security of the WiMAX network to a network behind the WiMAX network like a DSL network. The specification described in S3-060366 can only be realized by a combination with an IKEv2 protocol and an IPsec-tunnel via the access network (e.g. WLAN) and an additional network element PDG defined in the access network. This however is not available in a standard WiMAX access.

It may be seen as an object of the present invention to provide an access to a WiMAX-network Access Provider (AP) and via the WiMAX network to an already existing network Service Provider (SP) and the services thereof, for example a DSL provider, while maintaining the authentication and authorization as well as a cryptographically protected access, under the consideration of a method for such networks.

The object of the present invention is solved by the subject-matter of the independent claims, wherein advantageous embodiments are incorporated in the dependent claims.

According to an exemplary embodiment of the invention, the method for supporting an existing authentication infrastructure at an Extensible Authentication Protocol (EAP) based network access comprises authenticating and authorising an access to an Access Provider (AP) by an EAP method corresponding to a Worldwide Interoperability for Microwave Access (WiMAX), which inner EAP method is carried out by an EAP server, converting access data comprised in the EAP method into a format being readable by an Authentication Sever (AS) of a Service Provider (SP) by the Access Provider, forwarding required information out of the EAP method to an authentication device by the EAP server, authenticating an access to the Service Provider by the authentication device, and providing a successful authentication of the access to the Service Provider at the Authentication Sever and data obtained by the Service Provider.

Thus, it is possible for a WiMAX access, which may be a user or a terminal or device, to access to a further network like a DSL, which further network own an own instance for authentication and authorization, while maintaining a safe access vie e.g. a wireless interface or air interface.

According to an exemplary embodiment of the invention the EAP method includes an inner EAP method and an outer EAP method, wherein authenticating and authorising an access to an Access Provider is carried out by an outer EAP method and providing required information to be forwarded is carried out of an inner EAP method.

The outer EAP method allows the authentication and authorization of the WiMAX access to an Access Provider, which may be a Provider of the so called "last mile" to the user, wherein the inner EAP method allows the provision of information to a Service Provider, which may be the provider for the internet service like DSL.

According to an exemplary embodiment of the invention the EAP server is comprised in a Security Gateway (SGW).

According to an exemplary embodiment of the invention forwarding of required information out of the inner EAP method by the EAP server is carried out to an Authentication Client (AC) as authentication device, which Authentication Client supports a protocol required by the Authentication Sever of the Service Provider.

Thus, an Authentication client at the Access Provider site communicates with an Authentication Server at the Service Provider site, wherein the communication is carried out on a compatible protocol for the Client and the Server.

According to an exemplary embodiment of the invention authenticating an access to the Service Provider is carried out to the Authentication Sever of the Service Provider by the Authentication Client.

The Authentication Client may be responsible for the authentication of the access to the service provider, maintaining the security of the data transmission.

According to an exemplary embodiment of the invention providing a successful authentication of the access at the Authentication Sever and data obtained by the Service Provider is carried out by the Authentication Client to the EAP server.

Thus, the EAP Server receives the information concerning the authentication and access data from the Authentication Client.

According to an exemplary embodiment of the invention providing a successful authentication of the access at the Authentication Sever and data obtained by the Service Provider is carried out to the EAP server by the Authentication Sever of the Service Provider.

According to an exemplary embodiment of the invention the method further comprises authenticating the access to the Service Provider by the EAP server.

According to an exemplary embodiment of the invention the method further comprises providing the access by the Service Provider with at least one out of the group consisting of the username, the password and a hash value generated based on a password.

Thus, the identity of the terminal, the device or the user may be checked by very private access data, being only known by the authorizes access.

According to an exemplary embodiment of the invention the method further comprises converting from CHAP/PAP into PPPoE.

According to an exemplary embodiment of the invention the method further comprises authenticating to the Access Provider and to the Service Provider at the same time.

By authenticating to the Access Provider and to the Service Provider at the same time a fast access may be achieved also with respect to the e.g. DSL network.

According to an exemplary embodiment of the invention authenticating by the Authentication Client to the Authentication Sever of the Service Provider an access takes place to the Authentication Sever of a DSL net.

A DSL network is a very common application for a Service Provider network.

According to an exemplary embodiment of the invention the Access Provider is a Wireless Local Area Network (WLAN).

A WLAN is presently a widely used network for variable access points when requiring a high mobility.

According to an exemplary embodiment of the invention the access is at least one out of the group consisting of an access related to a user and an access related to a terminal or device.

Thus, the authentication and authorization may be carried out with respect to a user, which user may use different access terminal, e.g. when travelling or moving or working in a shared office environment, as well as a terminal, which is of importance, when a plurality of users share a highly specified terminal, which specified terminal is the subject for the access.

According to an exemplary embodiment of the invention the EAP method is out of the group consisting of EAP-TTLS, EAP-PEAP, EAP-GTC, EAP-MD5.

According to an exemplary embodiment of the invention a communication between the Security Gateway and the Authentication Client is based on a common protocol exchanging data required for authentication between the Security Gateway and the Authentication Client.

According to an exemplary embodiment of the invention a programme element, which when being execute on a processor, is adapted to carry out the inventive method.

According to an exemplary embodiment of the invention a computer readable medium has stored thereon the inventive programme element.

According to an exemplary embodiment of the invention a device for supporting an existing authentication infrastructure at an Extensible Authentication Protocol (EAP) based network access, comprises an Access Provider authenticating and authorising unit being adapted for authenticating and authorising an access to an Access Provider (AP) by an EAP method corresponding to a Worldwide Interoperability for Microwave Access (WiMAX), which inner EAP method is carried out by an EAP server, a converting unit being adapted for converting access data comprised in the inner EAP method into a format being readable by an Authentication Sever (AS) of a Service Provider (SP) by the Access Provider, a forwarding unit being adapted for forwarding required information out of the EAP method to an authentication device by the EAP server, a Service Provider authenticating unit being adapted for authenticating an access to the Service Provider by the authentication device, and a providing unit being adapted for providing a successful authentication of the access to the Service Provider at the Authentication Sever and data obtained by the Service Provider.

According to an exemplary embodiment of the invention a Security Gateway and a Authentication Client are realized in one net element.

This allows a compact build up of the inventive device.

It should be noted that the previously and in the following described embodiments may also be combined without departing from the scope of the present invention.

Further, it should be noted that the description and the explanation of the method and the embodiments of the method also apply for the programme element, the computer readable medium and the corresponding device.

These and other aspects of the present invention will become apparent from and elucidated with reference to the embodiments described hereinafter.

Exemplary embodiments of the present invention will be described in the following with reference to the following drawings.

Fig. 1 describes a WiMAX network architecture in its general form.

Fig. 2 illustrates a WiMAX network registration.

Fig. 3 illustrates an access authentication with a security gateway.

Fig. 4 illustrates an access authentication with a security gateway and a separate authentication client.

Fig. 5 illustrates a flow chart of an exemplary embodiment of the inventive method.

Fig. 6 illustrates an schematic overview over an exemplary embodiment of an inventive device.

Fig. 1 describes a WiMAX network architecture in its general form. The WiMAX network architecture is described in the introductory part of the description and will not be repeated in detail, but is herewith incorporated by reference.

Fig. 2 illustrates a WiMAX network registration, which is already described in the introductory part of the description and will not be repeated in detail, but is herewith incorporated by reference.

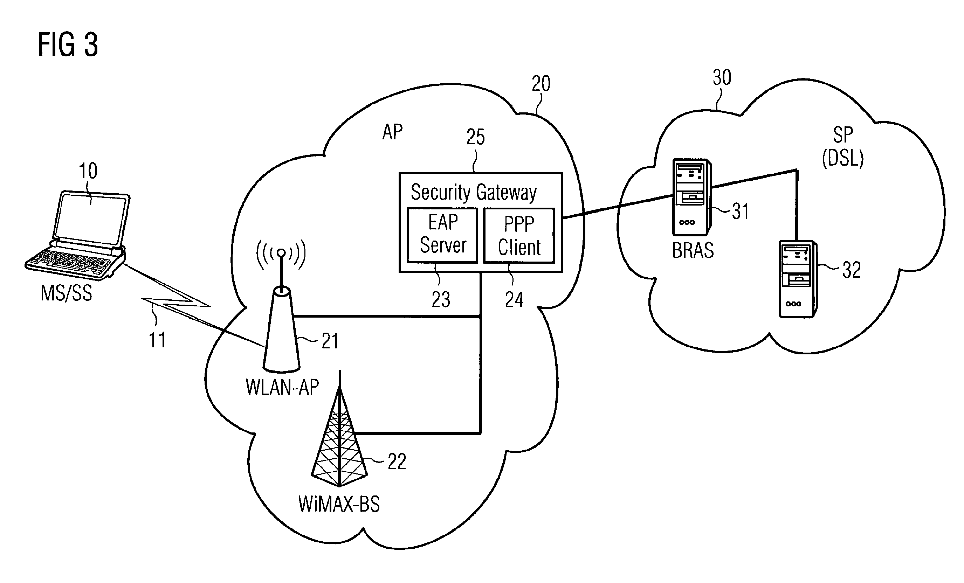

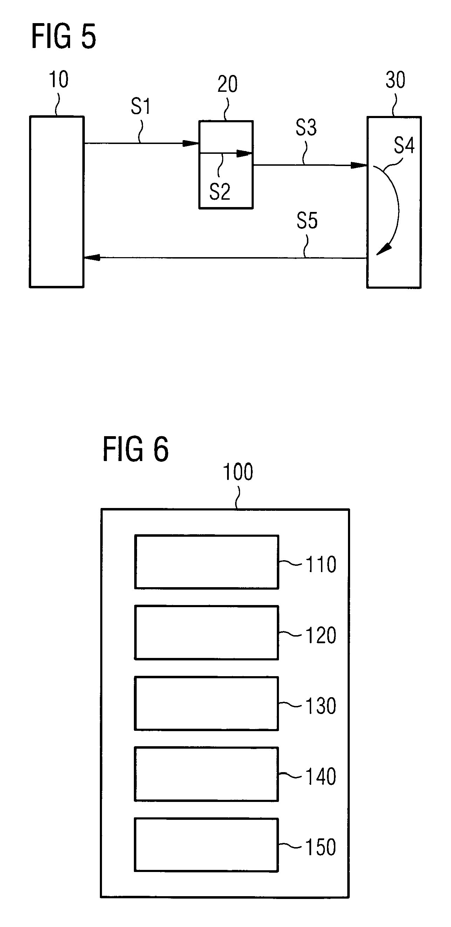

Fig. 3 and Fig. 5 illustrate an access authentication with a security gateway. A terminal 10 in form of a subscriber station or a mobile subscriber station SS/MS provides an access to a network 20 of an Access Provider. It should be noted that the access may be related to a terminal as well as a user, so that in the following the access of a terminal should be understood as both, a user-related access as well as a terminal access. The terminal is authenticated and authorized S1 by a so-called tunnel EAP method like EAP-TLS, EAP-TTLS or EAP-PEAP corresponding to a WiMAX standard to the Access Provider network. In the present embodiment, the terminal accesses to a Wireless Local Area Network access point 21 via a wireless communication 11, so that a particular security must be guaranteed owing to the open and free available wireless interface or air interface. In the present embodiment, this EAP method is carried out by an EAP server 23 of the Access Provider, which EAP server 23 authenticates the terminal or the WiMAX user 10. In the context of the execution of this EAP method, as an "inner" tunnelled EAP method such method is used, which allows the authentication to the Service Provider network 30. In particular, EAP-MD5 or EAP-GTC may be used. In the present embodiment, the terminal may use terminal access data or user access data obtained from the service provider, e.g. user name and/or password.

This inner EAP method will be handled by the EAP server of the Access Provider. The Access Provider network converts S2 access data for the Service Provider network obtained from the inner EAP method into a format being appropriate for the authentication server 32 of the Service Provider, like CHAP/PAP in PPP over Ethernet. This conversion may be carried out in a Security Gateway (SGW) 25 of the Access Provider. An exemplary realization thereof may be obtained from S3-060366. However, S3-060366 does not consider the case of a tunnelled EAP method and does not relate to a simultaneous authentication of the access network 10.

The Security Gateway 25 may provide or forward S3 the required information from the inner EAP method to an authentication client 24, which client supports a protocol required for the authentication server 32 of the service provider network 30, e.g. CHAP-PAP, and carries out an authentication S4 for the terminal 10 and the user 10, respectively. The authentication client is also denoted as PPP client 24.

The authentication client notifies S5 the EAP server 23 a successful authentication to the authentication server 32 of the DSL network 30 of the terminal and user, respectively, and provides or forwards the obtained data to the EAP server 23. Then the EAP server 23 of the Access Provider is capable of successfully authenticating the terminal and the user, respectively, and allows an access. The communication between the Security Gateway 25 and the authentication server 32 may take place via a Broadband Router Access Server (BRAS) 31 on the landline side 30.

The Access Provider network 20 may also comprise a WiMAX base station 22.

The Security Gateway 25 and the authentication client 24 may be realized in one network element, as illustrated in Fig. 3. On a WiMAX access provider this may be for example an access service network gateway or an extended base station.

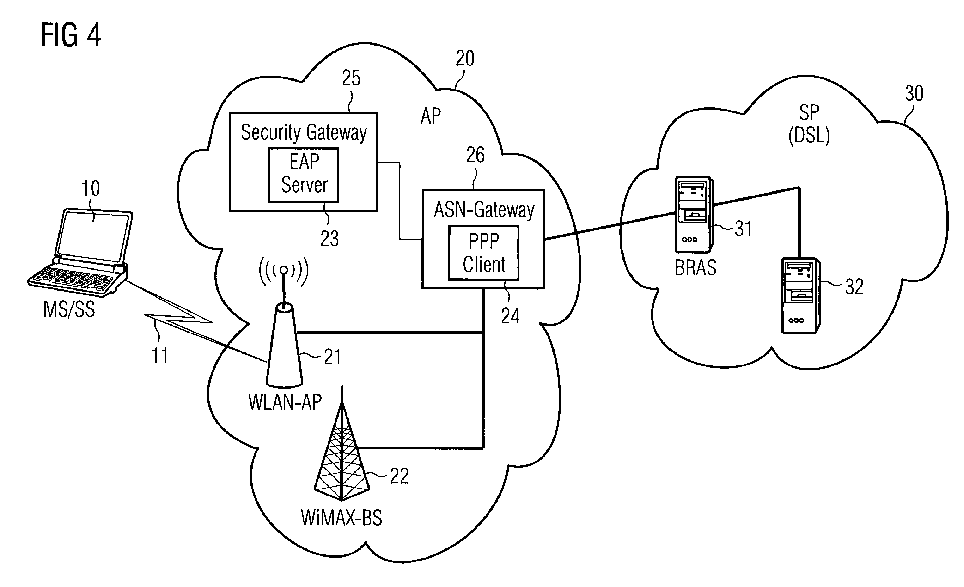

According to a further exemplary embodiment, the Security Gateway 25 including the EAP server 23 may be realized in a network element different from a network element 26 of the authentication client 24, which authentication client communicates with the authentication server 32 of the Service Provider, as illustrated in Fig. 4. The authentication client 24 or PPP client 24 may be provided in an Access Service Network (ASN) Gateway 26. The communication between these elements takes place over a common protocol, which protocol exchanges the required data for the authentication between the Security Gateway 25 and the authentication client 24.

According to a further exemplary embodiment, the authentication server in the Service Provider network already supports the EAP method. In this case, the information and the messages of the inner EAP method may be directly exchanged between the Security Gateway 25 and the authentication server 32 of the Service Provider.

According to a further exemplary embodiment, the access provider network 20 is a Wireless Local Area Network access network.

Fig. 6 schematically illustrates an exemplary embodiment of the inventive device 100 for supporting an existing authentication infrastructure at an Extensible Authentication Protocol (EAP) based network access, which device comprises an Access Provider authenticating and authorising unit 110 for authenticating and authorising an access to an Access Provider by an EAP method corresponding to a Worldwide Interoperability for Microwave Access (WiMAX), which inner EAP method is carried out by an EAP server, a converting unit 120 for converting access data comprised in the inner EAP method into a format being readable by an Authentication Sever of a Service Provider by the Access Provider, a forwarding unit 130 for forwarding required information out of the EAP method to an authentication device by the EAP server, a Service Provider authenticating unit 140 for authenticating an access to the Service Provider by the authentication device, and a providing unit 150 for providing a successful authentication of the access to the Service Provider at the Authentication Sever and data obtained by the Service Provider.

It should be noted that the above embodiments may be used for WiMAX in the context of a terminal authentication or device authentication as well as in the context of a user authentication. It is also possible to provide the above exemplary embodiments for a so-called double EAP, which combines a terminal and user authentication with two linked EAP authentications. An example thereof is the authentication of a terminal by a first EAP method and a subsequent authentication of a user with the inventive method, wherein the user will be authenticated with an outer EAP method to the Access Provider and with the inner EAP method to the Service Provider.

In the WiMAX network tunnelled EAP methods are available for a secure registration to a WiMAX network, and thus, will be used by the corresponding terminals. Thus, the invention does not require any extensive modifications or any modifications extending a standard of the WiMAX network. In particular, a Broadband Router Access Server (BRAS) 31 on the landline side does not have to be adapted, so that there is no acceptance problem with the client owing to the presently installed infrastructure.

The present infrastructure for a secure registration to a service provider network of a DSL provider, Internet Service Provider (ISP) or a private network is commonly usable, and may be used without modifications, which according to the prior art would not be possible. According to the prior art, such a safe access is only possible with extensive modifications of a present network structure.

The present invention allows the registration to a DSL network via CHAP/PAP via a wireless access technology like WiMAX or Wireless Local Area Network with a high cryptographic security via a wireless access by WiMAX, which access is considered as unsafe in the prior art. It should be noted that a direct registration via CHAP/PAP and EAP-MD5 or EAP-GTC, respectively, via a wireless access without further security mechanisms would be unsecure and therefore not acceptable.

For the both embodiments illustrated in Fig. 3 and Fig. 4, the EAP server and the authentication server usually are connected with a user database or terminal database. These databases may be provided as different databases for the Access Provider and the Service Provider, respectively. However, it is also possible to provide a common database, for example for the case that the same provider controls both, the Access Provider as well as the Service Provider.

It should be noted that the term "comprising" does not exclude other elements or steps, and the "a" or "an" does not exclude a plurality. Also elements described in association with different embodiments may be combined.

It should also be noted that reference signs in the claims shall not be construed as limiting the scope of the claims.

## Claims

1. Method for supporting an existing authentication infrastructure at an Extensible Authentication Protocol (EAP) based network access, comprising
authenticating and authorising (S1) an access (10) to an Access Provider (AP) (20) by an EAP method corresponding to a Worldwide Interoperability for Microwave Access (WiMAX), which inner EAP method is carried out by an EAP server (23);
converting (S2) access data comprised in the EAP method into a format being readable by an Authentication Sever (AS) (32) of a Service Provider (SP) (30) by the Access Provider (20) ;
forwarding (S3) required information out of the EAP method to an authentication device (24) by the EAP server (23);
authenticating (S4) an access to the Service Provider (30) by the authentication device (24); and
providing (S5) a successful authentication of the access (10) to the Service Provider (30) at the Authentication Sever (32) and data obtained by the Service Provider (30).

2. Method of claim 1, wherein the EAP method includes an inner EAP method and an outer EAP method, wherein authenticating and authorising an access (10) to an Access Provider (20) is carried out by an outer EAP method and forwarding required information is carried out out of an inner EAP method.

3. Method of any of the previous claims, wherein the EAP server (23) is comprised in a Security Gateway (SGW) (25).

4. Method of any of the previous claims, wherein forwarding of required information out of the inner EAP method by the EAP server (23) is carried out to an Authentication Client (AC) (24) as authentication device, which Authentication Client supports a protocol required by the Authentication Sever (32) of the Service Provider (30).

5. Method of claim 4, wherein authenticating an access (10) to the Service Provider (30) is carried out to the Authentication Sever (32) of the Service Provider (30) by the Authentication Client (24).

6. Method of any of claims 4 and 5, wherein providing a successful authentication of the access (10) at the Authentication Sever (32) and data obtained by the Service Provider (30) is carried out by the Authentication Client (24) to the EAP server (23).

7. Method of claim 6, wherein providing a successful authentication of the access (10) at the Authentication Sever (32) and data obtained by the Service Provider (30) is carried out to the EAP server (23) by the Authentication Sever (32) of the Service Provider (30).

8. Method of any of the previous claims, further comprising authenticating the access (10) to the Service Provider (32) by the EAP server (23).

9. Method of any of the previous claims, further comprising providing the access (10) by the Service Provider (30) with at least one out of the group consisting of the username, the password and a hash value generated based on a password.

10. Method of any of the previous claims, further comprising converting from CHAP/PAP into PPPoE.

11. Method of any of the previous claims, further comprising authenticating to the Access Provider (20) and to the Service Provider (30) at the same time.

12. Method of any of the claims 4 to 11, wherein authenticating by the Authentication Client (24) to the Authentication Sever (32) of the Service Provider (30) an access (10) takes place to the Authentication Sever (32) of a DSL net.

13. Method of any of the previous claims, wherein the Access Provider (20) is a Wireless Local Area Network (WLAN).

14. Method of any of the previous claims, wherein the access (10) is at least one out of the group consisting of an access related to a user and an access related to a terminal or device.

15. Method of claim 1, wherein the EAP method is out of the group consisting of EAP-TTLS, EAP-PEAP, EAP-GTC, EAP-MD5.

16. Method of any of the claims 4 to 15, wherein a communication between the Security Gateway (25) and the Authentication Client (24) is based on a common protocol exchanging data required for authentication between the Security Gateway (25) and the Authentication Client (24).

17. Programme element, which when being execute on a processor, is adapted to carry out the method of any of the previous claims.

18. Computer readable medium having stored thereon the programme element of claim 17.

19. Device (100) for supporting an existing authentication infrastructure at an Extensible Authentication Protocol (EAP) based network access, comprising
Access Provider authenticating and authorising unit (110) being adapted for authenticating and authorising an access to an Access Provider (AP) by an EAP method corresponding to a Worldwide Interoperability for Microwave Access (WiMAX), which inner EAP method is carried out by an EAP server;
converting unit (120) being adapted for converting access data comprised in the inner EAP method into a format being readable by an Authentication Sever (AS) of a Service Provider (SP) by the Access Provider;
forwarding unit (130) being adapted for forwarding required information out of the EAP method to an authentication device by the EAP server;
Service Provider authenticating unit (140) being adapted for authenticating an access to the Service Provider by the authentication device; and
providing unit (150) being adapted for providing a successful authentication of the access to the Service Provider at the Authentication Sever and data obtained by the Service Provider.

20. Device of claim 19, wherein a Security Gateway and a Authentication Client are realized in one net element.
